# EUROPÄISCHE PATENTSCHRIFT

(11) **EP 3 698 450 B1**
(45) Veröffentlichungstag und Bekanntmachung des Hinweises auf die Patenterteilung: **12.01.2022**
(21) Anmeldenummer: 18799676.4
(22) Anmeldetag: 17.10.2018
(51) Int. Cl.: H02J 7/00, H01M 10/052, H01M 10/42, H01M 10/44, H01M 10/48

(54) **VERFAHREN ZUM BETREIBEN VON MEHREREN IN EINEM ELEKTROGERÄT EINGESETZTEN AKKUPACKS UND ENTSPRECHENDES ELEKTROGERÄT**
METHOD FOR OPERATING MULTIPLE BATTERY PACKS INSERTED INTO AN ELECTRIC DEVICE AND CORRRESPONDING ELECTRIC DEVICE
PROCÉDÉ POUR FAIRE FONCTIONNER PLUSIEURS BLOCS D'ACCUMULATEURS INSTALLÉS DANS UN APPAREIL ÉLECTRIQUE ET APPAREIL ÉLECTRIQUE CORRESPONDANT

(30) Priorität: 17.10.2017 DE 102017124153
(43) Veröffentlichungstag der Anmeldung: 26.08.2020
(73) Patentinhaber: Einhell Germany AG, 94405 Landau / Isar (DE)
(72) Erfinder: THANNHUBER, Markus, 94405 Fichtheim (DE); WIMMER, Martin, Burbage, Leicestershire LE10 2RL (GB)
(74) Vertreter: Hofstetter, Schurack & Partner
(86) Internationale Anmeldenummer: PCT/EP2018/078365
(87) Internationale Veröffentlichungsnummer: WO 2019/076961

(56) Entgegenhaltungen:
- EP-A1- 2 988 393
- US-A1- 2015 042 283
- US-A1- 2016 141 734

## Beschreibung

Die Erfindung betrifft ein Verfahren zum Betreiben von zumindest zwei Akkupacks. Ferner betrifft die Erfindung noch ein elektrisches Gerät.

Es ist an sich bekannt, Elektrogeräte, wie zum Beispiel Elektrowerkzeuge, mittels Akkupacks mit elektrischer Energie zu versorgen. So zeigt beispielsweise die US 2015/0357684 A1 ein Schnittstellensystem für eine Mehrzahl von Batteriepacks. Die Batteriepacks selbst weisen mehrere sogenannte intelligente Schaltkreise auf, welche es erlauben, die Batteriepacks jeweils sequenziell zu entladen. Das Schnittstellensystem umfasst ein Sensornetzwerk, welches dazu ausgelegt ist, verschiedenste Batterieparameter der Batteriepacks zu überwachen, wobei diese Batterieparameter zum sequenziellen Zu- und Wegschalten der Batteriepacks herangezogen werden. Bei diesen Batterieparametern kann es sich beispielsweise um jeweilige Spannungen, Temperaturen oder auch Ströme in den Batteriepacks handeln.

Aus der Druckschrift US 2015/0042283 A1 ist ein Steuerungssystem für einen Batteriestapel für Elektrofahrzeuge bekannt. Der Batteriestapel kann mehrere Zell-Steuerungs-Paare aufweisen. Über einer vorbestimmten Grenztemperatur wird eine Zelle entkoppelt. Eine Zelle kann auch entkoppelt werden, damit sie nicht zu stark entladen wird.

Druckschrift US2016/0141734 A1 offenbart das Regeln der Temperatur einer elektrochemischen Batterie. Die Batterie besitzt mehrere Elemente mit jeweils mehreren elektrochemischen Zellen. Um ein homogenes Altern der Elemente zu erreichen, werden die Temperaturen der Elemente bzw. Zellen durch Wegschalten oder Hinzuschalten aneinander angeglichen.

Ferner beschreibt Druckschrift EP 2 988 393 A1 die Steuerung eines Warenautomaten. Eine Stromversorgungseinheit besitzt zwei ladbare Batteriesätze. Falls die Batterieladung eines Batteriesatzes unter einen vorbestimmten Wert fällt, wird der Batteriesatze entkoppelt.

Es ist die Aufgabe der vorliegenden Erfindung, ein Verfahren zum Betreiben von mehreren Akkupacks bereitzustellen, mittels welchen eine Energieversorgung eines Elektrogeräts besonders effizient erfolgen kann. Außerdem soll ein entsprechendes Elektrogerät bereitgestellt werden.

Diese Aufgabe wird durch ein Verfahren zum Betreiben von zumindest zwei Akkupacks sowie durch ein Elektrogerät mit den Merkmalen der unabhängigen Patentansprüche gelöst. Vorteilhafte Ausgestaltungen mit zweckmäßigen und nichttrivialen Weiterbildungen der Erfindung sind in den abhängigen Ansprüchen angegeben.

Bei dem erfindungsgemäßen Verfahren zum Betreiben von mehreren in einem Elektrogerät in jeweilige Steckplätze eingesetzten Akkupacks, insbesondere Lithium-Akkupacks, werden in vorgegebenen zeitlichen Intervallen jeweilige Ladezustände sowie Temperaturen der Akkupacks ermittelt und die Akkupacks derart verschaltet, dass eine vorgegebene Betriebsspannung am Elektromotor mittels der Akkupacks bereitgestellt wird, wobei falls zum Betreiben der vorgegebenen Betriebsspannung nicht alle im Elektrogerät eingesetzten Akkupacks benötigt werden, wenigstens der bezüglich des Ladezustands schwächste der Akkupacks und/oder der Akkupack mit der höchsten Temperatur vom Elektrogerät und den anderen Akkupacks passiv und/oder aktiv elektrisch entkoppelt wird.

Ein wesentlicher Erfindungsgedanke ist dabei, dass die bezüglich des Ladezustands und/oder der Temperatur schwächsten Akkupacks temporär herausgenommen werden, sodass die schwächsten Akkupacks vom Elektrogerät und von den anderen Akkupacks elektrisch entkoppelt sind. Je nach zu erfüllender vorgegebener Betriebsspannung am Elektrogerät und insgesamt im Elektrogerät eingesetzten Akkupacks kann dabei die Anzahl der Akkupacks, welche temporär von dem Elektrogerät und den anderen Akkupacks elektrisch entkoppelt werden, unterschiedliche ausfallen.

Der wenigstens eine Akkupack, der temporär vom Elektrogerät und den anderen Akkupacks elektrisch entkoppelt wird, wird dabei vollständig vom Elektrogerät und den anderen Akkupacks elektrisch getrennt.

Bei dem erfindungsgemäßen Verfahren werden mindestens zwei Akkupacks, zum Beispiel jeweils zwei 18 Volt Lithium-Ionen-Batterien, verwendet. Es ist aber auch möglich, wesentlich mehr Akkupacks zu verwenden. Unter einem Akkupack ist ein zusammengeschaltetes Paket mehrerer Akkumulator Zellen zu verstehen, welches zur praktischen Verwendung durch eine Umhüllung oder ein Gehäuse zusammengehalten und oft auch vor äußeren Einflüssen geschützt wird.

Falls mehr Akkupacks als zur Bereitstellung der Betriebsspannung des Elektrogeräts benötigt vorhanden sind, wird eine entsprechende Anzahl der Akkupacks, welche gerade nicht zur Spannungsversorgung des Elektrogeräts benötigt wird, vom Elektrogerät und den anderen Akkupacks elektrisch entkoppelt. Unter elektrisch getrennt beziehungsweise vollständig elektrisch getrennt ist dabei zu verstehen, dass der betreffende Akkupack beziehungsweise die betreffenden Akkupacks im Hinblick auf die Energieversorgung des Elektrogeräts von diesem und auch von den anderen Akkupacks getrennt sind.

Die Trennung jeweiliger Hauptstrompfade, also die elektrische Entkopplung des jeweiligen Akkupacks, kann prinzipiell auf unterschiedliche Weise erfolgen. Dies kann zum Beispiel mittels schaltbarer elektrischer Bauelemente, wie z.B. Transistoren, insbesondere Feldeffekttransistoren (FETs), besonders bevorzugt mittels Metall-Oxid-Halbleiter-Feldeffekttransistoren (MOSFETs), erfolgen. Es können alternativ oder zusätzlich auch andere, ähnlich elektronisch stromrichtende Bauelemente, wie z.B. Leistungsdioden, oder elektrisch schaltbare Bauelemente, z.B. Relais, verwendet werden. Derartige Bauelemente können sowohl im Gerät verbaut werden, in welchem die Verschaltung der Akkupacks realisiert wird oder auch in den Akkupacks selbst, wobei diese dann beispielsweise durch das Steuergerät geeignet angesteuert werden. Es ist sowohl eine passive also auch eine aktive Entkopplung der Akkupacks möglich.

Die elektrische Trennung betrifft also eine Art Hauptstrompfad, der zur elektrischen Energieversorgung des Elektrogeräts mittels des jeweiligen Akkupacks dient. Streng genommen ist natürlich selbst eine sensorische Verbindung, beispielsweise zum Messen von Spannungen oder Temperaturen in den Akkupacks ebenfalls eine elektrische Verbindung. Unter der elektrischen Trennung sind derartige Verbindungen jedoch nicht zwingend zu verstehen. Eine sensorische Verbindung kann also bestehen bleiben. Über eine solche sensorische Verbindung können zum Beispiel verschiedenste Größen der jeweiligen Akkupacks fortlaufend an das Elektrogerät übertragen werden, und zwar unabhängig vom Schaltzustand beziehungsweise der Verschaltung der Akkupacks untereinander.

Beispielsweise können bei dem erfindungsgemäßen Verfahren die Akkupacks abwechselnd zur Energieversorgung verwendet, also abwechselnd entladen werden. Im Extremfall kann auch erst einer oder es können auch mehrere Akkupacks vollständig entleert und dann weitere Akkupacks vollständig entleert werden, bevorzugt erfolgt aber ein abwechselnder Betrieb der im Elektrogerät eingesetzten Akkupacks in dem Sinne, dass die Akkupacks abwechselnd immer stückweise entleert werden. Ein Schaltvorgang zum Wechseln der Verschaltung der Akkupacks zum Entkoppeln und Koppeln mit den Elektrogeräten in anderen Akkupacks kann vorzugsweise innerhalb weniger Millisekunden oder sogar kontinuierlich entsprechend gegebener Spannungslagen erfolgen. Mittels Dioden könnte beispielsweise eine passive und kontinuierliche Schaltung erfolgen, um die Akkupacks elektrisch zu entkoppeln und zu koppeln.

Beim Herausnehmen von einem oder mehreren Akkupacks wird der betreffende Akkupack, der zunächst noch mit dem Elektrogerät und den anderen Akkupacks verbunden ist, zunächst vollständig getrennt und erst dann ein anderer Akkupack, der bislang herausgenommen war, also elektrisch von Elektrogeräten in anderen Akkupacks entkoppelt war, elektrisch zur Energieversorgung des Elektrogeräts mit diesem und den anderen Akkupacks verbunden.

Durch das erfindungsgemäße Verfahren kann die Plattformspannung der insgesamt eingesetzten Akkupacks relativ niedrig gehalten werden. Des Weiteren können mittels des erfindungsgemäßen Verfahrens bestimmte Elektromotoren effizienter betrieben werden. Die Akkupacks können mittels des erfindungsgemäßen Verfahrens zudem besonders vorteilhaft thermisch geführt werden, da wenigstens der bezüglich des Ladezustands schwächste der Akkupacks und/oder der Akkupack mit der höchsten Temperatur von Elektrogeräten in anderen Akkupacks temporär elektrisch entkoppelt wird.

Die Akkupacks können in bestimmten Bereichen betrieben werden, dadurch können beispielsweise die maximal auftretenden Temperaturen bei den Akkupacks in einem möglichst optimalen Temperaturbereich gehalten werden. Der Erfindung liegt die Erkenntnis zugrunde, dass wenn man Akkupacks mit einer sehr hohen Last belastet, man die Akkupacks üblicherweise nicht bis zum Schluss entleeren kann. Der so genannte Metabolismus der Akkupacks arbeitet noch nach, wodurch die Energie- und Leistungsabgabe eines hoch belasteten Akkupacks früher wegbricht. Durch das rechtzeitige Wechseln der Akkupacks zur Energieversorgung des Elektrogeräts können sich die Akkupacks jeweils wechselweise erholen, sodass die jeweilige Nennkapazität der Akkupacks besser ausgenutzt werden kann.

Durch die erfindungsgemäße elektrische Entkopplung der jeweiligen Akkupacks nach einer definierten Lastphase wird der Elektrochemie oder dem so genanntem elektrochemischen Metabolismus der Akkupacks Zeit zur Regeneration gegeben, wodurch eine bessere absolute Kapazitätsausnutzung erzielt werden kann. Wesentlich hierbei ist auch, dass nie eine elektrische Verbindung zwischen den Akkupacks besteht, die zum einen gerade mit dem Elektrogerät verbunden und in Reihe geschaltet und zum anderen gerade nicht mit dem Elektrogerät und den anderen Akkupacks verbunden sind, sodass keine Ladungsmengen zwischen den Akkupacks fließen können, welche einerseits mit dem Elektrogerät verbunden und andererseits vom Elektrogerät entkoppelt sind.

Eine vorteilhafte Ausführungsform der Erfindung sieht vor, dass der Akkupack mit der höchsten Temperatur vom Elektrogerät und den anderen Akkupacks elektrisch entkoppelt wird, selbst wenn ein anderer Akkupack einen niedrigeren Ladezustand aufweisen sollte, falls beim Akkupack mit der höchsten Temperatur diese eine vorgegebene Grenztemperatur überschreitet. Die Grenztemperatur kann derart festgelegt werden, dass sichergestellt werden kann, dass die Akkupacks bei Berücksichtigung dieser Grenztemperatur keinen zu starken Schaden nehmen beziehungsweise zu schnell altern. Vorzugsweise ist die Temperatur also im Zweifel die wichtigere zu beachtende Größe als der eigentliche Ladezustand der jeweiligen Akkupacks. Genauso gut kann natürlich auch mit mehreren Akkupacks verfahren werden, sofern mehrere Akkupacks gleichzeitig vom Elektrogerät und den anderen Akkupacks elektrisch entkoppelt werden sollen.

Gemäß einer weiteren vorteilhaften Ausführungsform der Erfindung ist es vorgesehen, dass das Elektrogerät 36 Volt Betriebsspannung aufweist und drei 18 Volt Akkupacks im Elektrogerät eingesetzt werden, wobei der bezüglich des Ladezustands schwächste der Akkupacks und/oder der Akkupack mit der höchsten Temperatur vom Elektrogerät und den anderen Akkupacks elektrisch entkoppelt wird. Alternativ ist es auch möglich, dass das Elektrogerät 54 Volt Betriebsspannung aufweist und vier 18 Volt Akkupacks im Elektrogerät eingesetzt werden, wobei der bezüglich des Ladezustands schwächste der Akkupacks und/oder der Akkupack mit der höchsten Temperatur von Elektrogeräten in anderen Akkupacks elektrisch entkoppelt wird. Natürlich sind auch Elektrogeräte mit anderen Betriebsspannungen und eine Zusammensetzung von anderen Akkupacks möglich.

In weiterer vorteilhafter Ausgestaltung der Erfindung ist es vorgesehen, dass die Länge der zeitlichen Intervalle umso kleiner vorgegeben wird, je schneller sich die Ladezustände und/oder Temperaturen der Akkupacks verändern. Wird also besonders viel Leistung von den Akkupacks und somit vom Elektrogerät abverlangt, so wird die zeitliche Taktung wesentlich enger gewählt, gemäß welcher die Verschaltung der Akkupacks, also das Herausnehmen und Hinzufügen der Akkupacks zur elektrischen Energieversorgung des Elektrogeräts erfolgt. Die Länge der zeitlichen Intervalle wird also vorzugsweise daran angepasst, wie stark jeweilige Akkupacks gerade belastet werden, infolgedessen sich die Ladezustände und/oder Temperaturen der Akkupacks verändern. Dadurch kann die Lebensdauer der Akkupacks verlängert werden, wobei zudem die Kapazitätsausnutzung der Akkupacks verbessert werden kann, da sich die Akkupacks durch die Anpassung der zeitlichen Intervalle hinsichtlich ihres elektrochemischen Metabolismus besser erholen können und/oder nicht zu stark erhitzen.

Das erfindungsgemäße Elektrogerät mit mehreren in jeweilige Steckplätze eingesetzten Akkupacks umfasst eine Steuereinrichtung, welche dazu eingerichtet ist, fortlaufend jeweilige Ladezustände und Temperaturen der Akkupacks zu ermitteln um basierend darauf die Akkupacks derart durch Anstauung einer Schalteinrichtung zu verschalten, dass eine vorgegebene Betriebsspannung am Elektromotor des Elektrogeräts mittels der Akkupacks bereitgestellt wird, wobei falls zum Bereitstellen der vorgegebenen Betriebsspannung nicht alle im Elektrogerät eingesetzten Akkupacks benötigt werden, die Steuereinrichtung dazu eingerichtet ist, wenigstens den bezüglich des Ladezustands schwächsten der Akkupacks und/oder den Akkupack mit der höchsten Temperatur vom Elektrogerät und den anderen Akkupacks passiv und/oder aktiv elektrisch zu entkoppeln. Vorteilhafte Ausgestaltungen des erfindungsgemäßen Verfahrens sind als vorteilhafte Ausgestaltungen des erfindungsgemäßen Elektrogeräts und umgekehrt anzusehen, wobei das Elektrogerät insbesondere Mittel zur Durchführung der Verfahrensschritte aufweist.

Eine vorteilhafte Ausführungsform des erfindungsgemäßen Elektrogeräts sieht vor, dass die Steuereinrichtung dazu eingerichtet ist, die vorgegebene Betriebsspannung anhand eines Elektromotors des Elektrogeräts zu bestimmen. Die Steuereinrichtung erkennt also, welche Betriebsspannung der eingesetzte Elektromotor des Elektrogeräts benötigt, sodass die Steuereinrichtung basierend darauf ganz einfach die Verschaltung der Akkupacks regeln kann.

Eine weitere vorteilhafte Ausführungsform des erfindungsgemäßen Elektrogeräts sieht vor, dass das Elektrogerät eine Erfassungseinrichtung aufweist, welche dazu ausgelegt ist, zumindest eine den Ladezustand charakterisierende Messgröße je Akkupack zu erfassen. Die Erfassungseinrichtung kann beispielsweise dazu ausgelegt sein, eine jeweilige Spannung, eine Temperatur, eine Impedanz und/oder einen Zelldruck bei den Akkupacks zu erfassen. Für eine oder mehrere dieser Messgrößen können beispielsweise Kennfelder hinterlegt werden, anhand derer die Steuereinrichtung dann ermitteln kann, wie es um den jeweiligen Ladezustand der Akkupacks bestellt ist.

In weiterer vorteilhafter Ausgestaltung des erfindungsgemäßen Elektrogeräts ist es vorgesehen, dass mittels der Schalteinrichtung die in jeweilige Steckplätze des Elektrogeräts eingesteckten Akkupacks beliebig miteinander in Reihe schaltbar sind. Eine beliebige parallele Verschaltung ist aber auch denkbar. In letzterem Fall müsste man die Akkupacks allerdings auf in etwa das gleiche Spannungsniveau bringen, da sonst zu hohe Ausgleichsströme fließen würden. Beispielsweise ist es möglich, dass das Elektrogerät standardmäßig vier Steckplätze für Akkupacks aufweist, also beispielsweise ein Vier-Fach-Batterieeinsatz-Gehäuse aufweist. Diese erlaubt dem Kunden seinen eigenen Anforderungen entsprechend zu entscheiden, wie er sein Elektrogerät beispielsweise in der Reichweite oder Betriebsdauer gegenüber einer eventuellen Basisversion erweitern will. Die Akkupacks können dabei an beliebigen Steckplätzen des Elektrogeräts eingesetzt werden, unabhängig davon, welche Betriebsspannung ein Elektromotor des Elektrogeräts hat. Denn dadurch, dass die Schalteinrichtung die in jeweiligen Steckplätzen des Elektrogeräts eingesteckten Akkupacks beliebig miteinander in Reihe verschalten kann, ist es unerheblich, in welchen der Steckplätze des Elektrogeräts gerade welcher Akkupack eingesteckt worden sind. Dadurch ergibt sich eine maximale Flexibilität beim Betreiben des Elektrogeräts.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Perspektivansicht eines Akku-Rasenmähers, welcher eine transparente Abdeckung aufweist, unterhalb welcher mehrere Akkupacks aufgenommen werden können;
- Fig. 2: eine perspektivische Detailansicht auf den Akku-Rasenmäher, wobei die Abdeckung geöffnet ist und zwei der Akkupacks gerade in den Akku-Rasenmäher eingesetzt werden;
- Fig. 3: eine stark schematisierte Darstellung des Rasenmähers, wobei ein System zum Betreiben der Mehrzahl an in dem Rasenmäher eingesetzten Akkupacks gezeigt ist, welches dazu eingerichtet ist, die Akkupacks abwechselnd zur Energieversorgung des Akku-Rasenmähers zu entladen;
- Fig. 4: eine schematische Darstellung des Systems und zugehörige Transistoren sowie Dioden zum abwechselnden Entladen der Akkupacks.

In den Figuren sind gleiche oder funktionsgleiche Elemente mit den gleichen Bezugszeichen versehen worden.

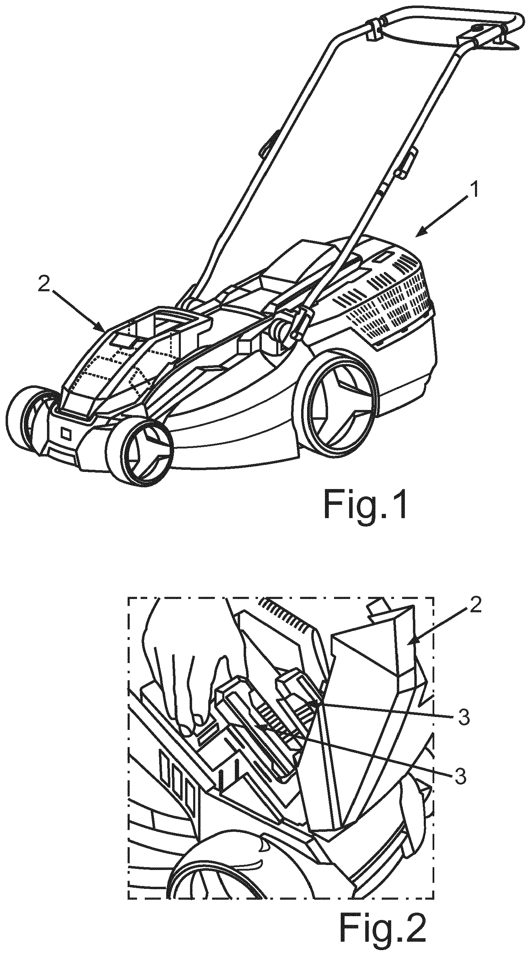

Ein Akku-Rasenmäher 1 ist in einer Perspektivansicht in Fig. 1 gezeigt. Unterhalb von einer transparenten Abdeckung 2 des Akku-Rasenmähers 1 finden mehrere Akkupacks 3, wie in Fig. 2 in der Detailansicht gezeigt, Platz. Die Akkupacks 3 können alternierend entladen werden, um den Akku-Rasenmäher 1 zu betreiben.

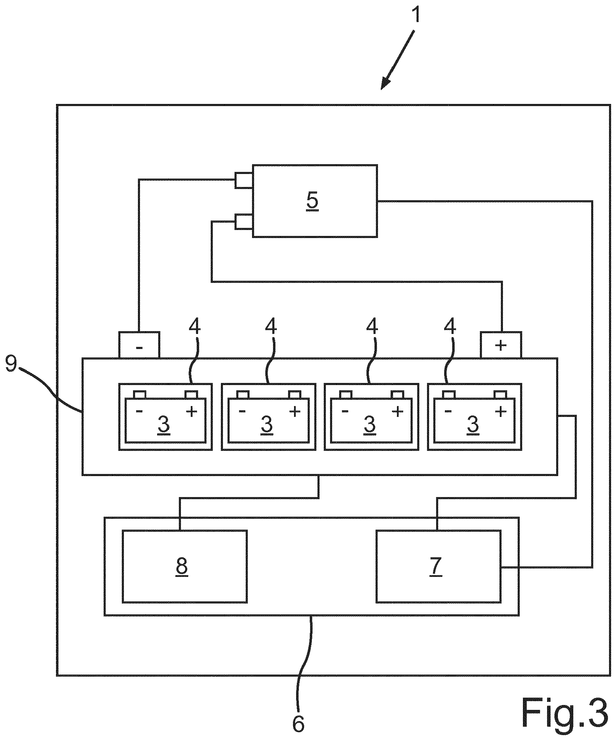

In Fig. 3 ist der Rasenmäher 1 in einer stark schematisierten Darstellung gezeigt. Der Rasenmäher 1 weist im vorliegend gezeigten Ausführungsbeispiel vier Steckplätze 4 zum Aufnehmen der jeweiligen Akkupacks 3 auf. Bei den Akkupacks 3 handelt es sich beispielsweise um 18 Volt Lithium-Ionen-Akkupacks. Darüber hinaus ist ein Elektromotor 5 des Rasenmähers 1 schematisch dargestellt, welcher mittels der in den Steckplätzen 4 aufgenommenen Akkupacks 3 mit Energie versorgt werden kann.

Ein System 6 zum Betreiben der Akkupacks 3 ist schematisch dargestellt, wobei das System 6 eine Steuereinrichtung 7 und eine Erfassungseinrichtung 8 aufweist. Die Steuereinrichtung 7 kann in Abhängigkeit von Signalen, welche die Erfassungseinrichtung 8 bezüglich der Akkupacks 3 bereitstellt, eine Schalteinrichtung 9 derart betätigen, dass die Akkupacks 3 zum einen eine vorgegebene Betriebsspannung des Elektromotors 5 bereitstellen. Zum anderen entkoppelt die Steuereinrichtung 7 - sofern zum Bereitstellen der vorgegebenen Betriebsspannung nicht alle im Rasenmäher 1 eingesetzten Akkupacks 3 benötigt werden - durch entsprechende Ansteuerung der Schalteinrichtung 9 wenigstens den bezüglich des Ladezustands schwächsten der Akkupacks 3 und/oder den Akkupack 3 mit der höchsten Temperatur vom Rasenmäher 1 und den anderen Akkupacks 3 elektrisch.

Nachfolgend wird ein Verfahren zum Betreiben der im Rasenmäher 1 eingesetzten Akkupacks 3 näher beschrieben. In vorgegebenen zeitlichen Intervallen ermittelt die Steuereinrichtung 7 jeweilige Ladezustände sowie Temperaturen der Akkupacks 3. Die Erfassungseinrichtung 8 kann dafür unterschiedliche, den Ladezustand der Akkupacks 3 charakterisierende Messgrößen je Akkupack 3 erfassen. Beispielsweise ist die Erfassungseinrichtung 8 dazu ausgelegt, eine jeweilige Spannung, eine Temperatur, eine Impedanz und/oder einen Zelldruck bei den Akkupacks 3 zu erfassen und entsprechende Daten an die Steuereinrichtung 7 zu übertragen. Die Steuereinrichtung 7 ist darüber hinaus dazu eingerichtet, die vorgegebene Betriebsspannung des Elektromotors 5 auszulesen und somit zu bestimmen.

Sollten beispielsweise die Ladezustände der eingesetzten Akkupacks 3 noch soweit ausreichen, dass zum Bereitstellen der vorgegebenen Betriebsspannung am Elektromotor 5 nicht alle im Elektrogerät eingesetzten Akkupacks 3 benötigt werden, wird beispielsweise der momentan bezüglich des Ladezustands schwächste der Akkupacks 3 durch entsprechende Ansteuerung der Schalteinrichtung 9 vom Elektromotor 5 und den anderen Akkupacks 3 getrennt. So sind beispielsweise gemäß der vorliegenden Darstellung nur die linken drei Akkupacks 3 miteinander in Reihe verschaltet und mit dem Elektromotor 5 elektrisch zur Energieversorgung gekoppelt, wobei der ganz rechts dargestellte Akkupack 3 von den anderen Akkupacks 3 entkoppelt und somit auch vom Elektromotor 5 entkoppelt ist.

Nach Verstreichen einer vorgegebenen Dauer ermittelt dann beispielsweise die Steuereinrichtung 7 für die linken drei Akkupacks 3 wiederum deren Ladezustände, vergleicht diese gegebenenfalls auch noch mit einem Ladezustand des rechten Akkupacks 3 und entscheidet basierend darauf, welcher der drei linken Akkupacks 3 vom Elektromotor 5 entkoppelt werden soll, wobei im Gegenzug der ganz rechts dargestellte Akkupack 3 wiederum mit den anderen verbleibenden Akkupacks 3 elektrisch gekoppelt und somit zur Energieversorgung mit dem Elektromotor 5 verbunden wird.

Zudem ist es auch möglich, dass der Akkupack 3 mit der höchsten Temperatur vom Elektromotor 5 von den anderen Elektropacks 3 elektrisch entkoppelt wird, selbst wenn ein anderer Akkupack 3 einen niedrigeren Ladestand aufweisen sollte, falls beim Akkupack 3 mit der höchsten Temperatur dieser eine vorgegebene Grenztemperatur überschreitet. Diese Grenztemperatur wird beispielsweise so festgelegt, dass sichergestellt werden kann, dass die Akkupacks 3 keinen Schaden nehmen. Anhand von Versuchen kann zudem beispielsweise festgestellt werden, in welchen Temperaturbereichen die Akkupacks 3 idealerweise zu betreiben sind, sodass diese keinen Schaden nehmen oder eine besonders hohe Leistungsfähigkeit aufweisen.

Anhand von derartigen Versuchen kann die besagte Grenztemperatur festgelegt werden. Sollte besonders viel Leistung von den Akkupacks 3 abgefragt werden, so kann es zu einer schnellen und starken Erhitzung der Akkupacks 3 kommen. Besonders in solchen Fällen kann es sinnvoll sein, nicht den Akkupack 3 mit dem geringsten Ladezustand sondern den Akkupack 3 mit der höchsten Temperatur von dem Elektromotor 5 und den anderen Akkupacks 3 elektrisch zu entkoppeln. In dem Fall wäre also die Temperatur im Zweifel sogar wichtiger als der Ladezustand, um festzulegen, welcher der Akkupacks 3 gerade vom Elektromotor 5 und den anderen Akkupacks 3 entkoppelt werden soll.

Die Steckplätze 4 sind derart mit der Schalteinrichtung 9 verschaltet, dass die Steuereinrichtung 7 die Schalteinrichtung 9 so ansteuern kann, dass jeweilige in die Steckplätze 4 eingesteckte Akkupacks 3 beliebig miteinander in Reihe geschaltet werden können. Die Akkupacks 3 können somit an beliebigen Stellen, und somit in beliebige Steckplätze 4, eingesteckt werden, unabhängig davon, welche Betriebsspannung der Elektromotor 5 aufweist. Unabhängig davon, in welchen Steckplatz 4 die Akkupacks 3 eingesteckt sind, können Verbindungsschaltungen mittels der Schalteinrichtung 9 so hergestellt werden, dass die jeweiligen Zustände der einzelnen Akkupacks 3 mittels der Erfassungseinrichtung 8 erkannt werden und die Steuereinrichtung 7 die Akkupacks 3 so zusammenschaltet, dass zum einen die Betriebsspannung des Elektromotors 5 erreicht wird und, falls mehr Akkupacks 3 als dazu benötigt vorhanden sind, die Steuereinrichtung 7 jeweils den hinsichtlich seines Ladungszustands schwächsten der Akkupacks 3 oder - wie obenstehend bereits beschrieben - den heißesten der Akkupacks 3 auskoppelt, damit dieser sich erholen kann und trotzdem sichergestellt wird, dass die benötigte Batteriespannung durch entsprechende Reihenschaltung der verbleibenden Akkupacks 3 am Elektromotor 5 anliegt.

Die Steuereinrichtung 7 kann insbesondere den Fall abdecken, dass auch nur drei der Akkupacks 3 zu je 18 Volt verwendet werden, wobei der Elektromotor 5 beispielsweise 36 Volt Betriebsspannung hat. Die Steuereinrichtung 7 kann auch den Fall abdecken, dass - wie hier dargestellt - vier der Akkupacks 3 zu je 18 Volt verwendet werden, wobei der Elektromotor 5 in dem Fall 54 Volt Betriebsspannung aufweisen kann.

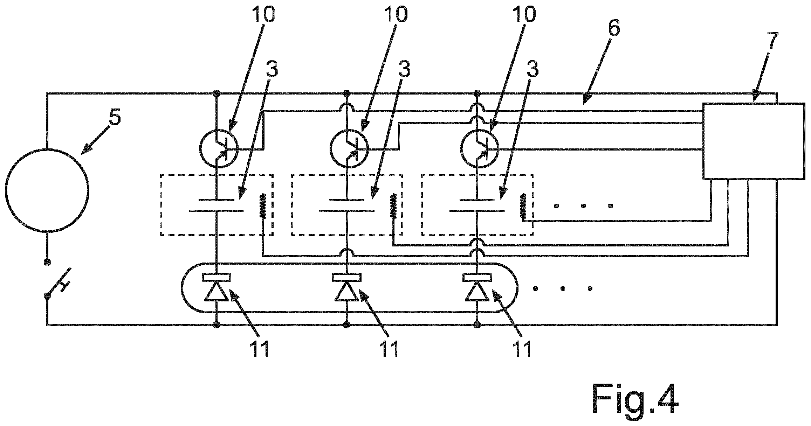

In Fig. 4 sind das System 6, die Akkupacks 3 sowie mehrere Transistoren 10 und Dioden 11 gezeigt. Die Transistoren 10 und die Dioden 11 bilden bei der hier gezeigten Ausführungsform also die hier nicht näher darstellte Schalteinrichtung 9 aus, deren Funktionsweise weiter oben schon in allgemeiner Form beschrieben worden war. Die Steuereinrichtung wird im hier gezeigten Fall durch einen Mikrokontroller 7 gebildet. Dieser erhält jeweilige Temperatursignale bezüglich der Akkupacks 3, beispielsweise wiederum mittels der hier nicht näher darstellten Erfassungseinrichtung 8. Der Mikrokontroller 7 ist dazu eingerichtet, in Abhängigkeit von den Temperatursignalen die Transistoren 10 anzusteuern, bei welchen es sich beispielsweise um MOSFETs handeln kann. Mittels der Transistoren 10 können die Akkupacks 3 in der bereits oben beschriebenen Weise elektrisch entkoppelt werden. Es erfolgt also beispielsweise eine aktive elektrische Entkopplung des jeweils heißesten Akkupacks 3. Mit anderen Worten erfolgt mittels der Transistoren 10 eine diskrete, digitale und getaktete Entkopplung und Kopplung der Akkupacks 3

Die Dioden 11 bilden eine Art Diodenfeld aus. Die einzelnen Dioden 11 können die jeweiligen Akkupacks 3 spannungsabhängig elektrisch entkoppeln und koppeln, indem in an sich bekannter Weise spannungsabhängig ein jeweiliger Strom durch die Dioden 11 fließt oder nicht fließt. Die Dioden 11 sind stromrichtende Schaltelemente und können die Akkupacks 3 kontinuierlich, also nicht getaktet und analog elektrisch entkoppeln und koppeln.

Durch entsprechende Gestaltung bzw. Programmierung des Mikrokontrollers 7 und entsprechende Eigenschaften der Dioden 11, insbesondere ihrer jeweiligen Strom-Spannungs-Kennlinien, kann die alternierende Entladung der Akkupacks 3 temperatur- und spannungsabhängig in einer ganz bestimmten Art erfolgen. Beispielsweise ist es dadurch möglich, dass der Akkupack 3 mit der höchsten Temperatur vom Elektrogerät 1, also von dem Motor 5, und den anderen Akkupacks 3 elektrisch entkoppelt wird, selbst wenn ein anderer Akkupack 3 einen niedrigeren Ladezustand aufweisen sollte, falls beim Akkupack 3 mit der höchsten Temperatur diese eine vorgegebene Grenztemperatur überschreitet.

Mittels des beschriebenen Systems 6 und des beschriebenen Verfahrens zum Betreiben der im Rasenmäher 1 eingesetzten Akkupacks 3 ist es möglich, die Akkupacks 3 thermisch besonders gut zu führen. Durch die alternierende Entladung der Akkupacks 3 können die Akkupacks 3 in einem Temperaturbereich betrieben und gehalten werden, welcher besonders gut zur Entladung der Akkupacks 3 geeignet ist. Insbesondere können dadurch auch zu hohe Temperaturen bei den Akkupacks 3 vermieden werden. Ferner ergibt sich auch der Vorteil, dass die Nennkapazität der Akkupacks 3 beim beschriebenen alternierenden Betrieb der Akkupacks 3 besonders gut ausgenutzt werden kann.

Das System 6 und das Verfahren zum Betreiben der Akkupacks 3 ist selbstverständlich auch auf andere Elektrogeräte übertragbar, und nicht nur auf den beschriebenen Akku-Rasenmäher 1 beschränkt.

### BEZUGSZEICHENLISTE:

- 1: Akku-Rasenmäher
- 2: Abdeckung
- 3: Akkupack
- 4: Steckplatz
- 5: Elektromotor
- 6: System
- 7: Steuereinrichtung
- 8: Erfassungseinrichtung
- 9: Schalteinrichtung
- 10: Transistor
- 11: Diode

## Patentansprüche

1. Verfahren zum Betreiben von mehreren in einem Elektrogerät (1) in jeweilige Steckplätze eingesetzten Akkupacks (3), insbesondere Lithium-Akkupacks, wobei jeder Akkupack ein zusammengeschaltetes Paket mehrerer Akkumulatorzellen ist, welches durch eine Umhüllung oder ein Gehäuse zusammengehalten wird, bei welchem Verfahren in vorgegebenen zeitlichen Intervallen jeweilige Ladezustände sowie Temperaturen der Akkupacks (3) ermittelt und die Akkupacks (3) derart verschaltet werden, dass eine vorgegebene Betriebsspannung am Elektrogerät (1) mittels der Akkupacks (3) bereitgestellt wird, wobei falls zum Bereitstellen der vorgegebenen Betriebsspannung nicht alle im Elektrogerät (1) eingesetzten Akkupacks (3) benötigt werden, wenigstens der bezüglich des Ladezustands schwächste der Akkupacks (3) und/oder der Akkupack (3) mit der höchsten Temperatur vom Elektrogerät (1) und den anderen Akkupacks (3) passiv und/oder aktiv elektrisch entkoppelt wird, wobei die Anzahl der Akkupacks, welche aufgrund der Temperatur und/oder des Ladezustands entkoppelt werden, von der vorgegebenen Betriebsspannung und der insgesamt in dem Elektrogerät eingesetzten Akkupacks abhängt.

2. Verfahren nach Anspruch 1,
**dadurch gekennzeichnet, dass**
der Akkupack (3) mit der höchsten Temperatur vom Elektrogerät (1) und den anderen Akkupacks (3) elektrisch entkoppelt wird, selbst wenn ein anderer Akkupack (3) einen niedrigeren Ladezustand aufweisen sollte, falls beim Akkupack (3) mit der höchsten Temperatur diese eine vorgegebene Grenztemperatur überschreitet.

3. Verfahren nach Anspruch 1 oder 2,
**dadurch gekennzeichnet, dass**
das Elektrogerät (1) 36V Betriebsspannung aufweist und drei 18V Akkupacks (3) im Elektrogerät (1) eingesetzt werden, wobei der bezüglich des Ladezustands schwächste der Akkupacks (3) und/oder der Akkupack (3) mit der höchsten Temperatur vom Elektrogerät (1) und den anderen Akkupacks (3) elektrisch entkoppelt wird.

4. Verfahren nach Anspruch 1 oder 2,
**dadurch gekennzeichnet, dass**
das Elektrogerät (1) 54V Betriebsspannung aufweist und vier 18V Akkupacks (3) im Elektrogerät (1) eingesetzt werden, wobei der bezüglich des Ladezustands schwächste der Akkupacks (3) und/oder der Akkupack (3) mit der höchsten Temperatur vom Elektrogerät (1) und den anderen Akkupacks (3) elektrisch entkoppelt wird.

5. Verfahren nach einem der vorhergehenden Ansprüche,
**dadurch gekennzeichnet, dass**
die Länge der zeitlichen Intervalle umso kleiner vorgegeben wird, je schneller sich die Ladezustände und/oder Temperaturen der Akkupacks (3) verändern.

6. Elektrogerät (1) mit mehreren in jeweilige Steckplätze (4) des Elektrogeräts (1) eingesetzten Akkupacks (3), wobei jeder Akkupack ein zusammengeschaltetes Paket mehrerer Akkumulatorzellen ist, welches durch eine Umhüllung oder ein Gehäuse zusammengehalten wird, wobei das Elektrogerät (1) eine Steuereinrichtung (7) umfasst, welche dazu eingerichtet ist, fortlaufend jeweilige Ladezustände und Temperaturen der Akkupacks (3) zu ermitteln und basierend darauf die Akkupacks (3) derart durch Ansteuerung einer Schalteinrichtung (9) des Elektrogeräts (1) zu verschalten, dass eine vorgegebene Betriebsspannung an einem Elektromotor (5) des Elektrogeräts (1) mittels der Akkupacks (3) bereitgestellt wird, wobei falls zum Bereitstellen der vorgegebenen Betriebsspannung nicht alle im Elektrogerät (1) eingesetzten Akkupacks (3) benötigt werden, die Steuereinrichtung (7) dazu eingerichtet ist, wenigstens den bezüglich des Ladezustands schwächsten der Akkupacks (3) und/oder den Akkupack (3) mit der höchsten Temperatur vom Elektrogerät (1) und den anderen Akkupacks (3) passiv und/oder aktiv elektrisch zu entkoppeln, wobei die Anzahl der Akkupacks, welche aufgrund der Temperatur und/oder des Ladezustands entkoppelt werden, von der vorgegebenen Betriebsspannung und der insgesamt in dem Elektrogerät eingesetzten Akkupacks abhängt.

7. Elektrogerät (1) nach Anspruch 6,
**dadurch gekennzeichnet, dass**
die Steuereinrichtung (7) dazu eingerichtet ist, die vorgegebene Betriebsspannung anhand des Elektromotors (5) des Elektrogeräts (1) zu bestimmen.

8. Elektrogerät (1) nach Anspruch 6 oder 7,
**dadurch gekennzeichnet, dass**
das Elektrogerät (1) eine Erfassungseinrichtung (8) aufweist, welche dazu ausgelegt ist, zumindest eine den Ladezustand charakterisierende Messgröße je Akkupack (3) zu erfassen.

9. Elektrogerät (1) nach Anspruch 8,
**dadurch gekennzeichnet, dass**
die Erfassungseinrichtung (8) dazu ausgelegt ist, eine jeweilige Spannung, eine Temperatur, eine Impedanz und/oder einen Zelldruck bei den Akkupacks (3) zu erfassen.

10. Elektrogerät (1) nach einem der Ansprüche 5 bis 9,
**dadurch gekennzeichnet, dass**
mittels der Schalteinrichtung (9) die in jeweiligen Steckplätzen (4) des Elektrogeräts (1) eingesetzten Akkupacks (3) beliebig miteinander in Reihe schaltbar sind.

## Claims

1. A method for operating multiple battery packs (3), in particular lithium battery packs, inserted into respective slots in an electric appliance (1), wherein each battery pack is an interconnected package of multiple accumulator cells, which is held together by an enclosure or a housing, in which method respective states of charge as well as temperatures of the battery packs (3) are ascertained in preset time intervals and the battery packs (3) are interconnected such that a preset operating voltage is provided at the electric appliance (1) by means of the battery packs (3), wherein, if not all of the battery packs (3) inserted in the electric appliance (1) are required for providing the preset operating voltage, at least that one of the battery packs (3) weakest with respect to the state of charge and/or the battery pack (3) with the highest temperature is passively and/or actively electrically decoupled from the electric appliance (1) and the other battery packs (3), wherein the number of the battery packs, which are decoupled due to the temperature and/or the state of charge, depends on the preset operating voltage and on the battery packs overall inserted in the electric appliance.

2. The method according to claim 1,
**characterized in that**
the battery pack (3) with the highest temperature is electrically decoupled from the electric appliance (1) and the other battery packs (3) even if another battery pack (3) should have a lower state of charge, if the temperature exceeds a preset limit temperature at the battery pack (3) with the highest temperature.

3. The method according to claim 1 or 2,
**characterized in that**
the electric appliance (1) has 36 V of operating voltage and three 18 V battery packs (3) are inserted in the electric appliance (1), wherein that one of the battery packs (3) weakest with respect to the state of charge and/or the battery pack (3) with the highest temperature is electrically decoupled from the electric appliance (1) and the other battery packs (3).

4. The method according to claim 1 or 2,
**characterized in that**
the electric appliance (1) has 54 V of operating voltage and four 18 V battery packs (3) are inserted in the electric appliance (1), wherein that one of the battery packs (3) weakest with respect to the state of charge and/or the battery pack (3) with the highest temperature is electrically decoupled from the electric appliance (1) and the other battery packs (3).

5. The method according to any one of the preceding claims,
**characterized in that**
the length of the time intervals is preset the smaller, the faster the states of charge and/or temperatures of the battery packs (3) change.

6. An electric appliance (1) with multiple battery packs (3) inserted into respective slots (4) of the electric appliance (1), wherein each battery pack is an interconnected package of multiple accumulator cells, which is held together by an enclosure or a housing, wherein the electric appliance (1) includes a control device (7), which is configured to continuously ascertain respective states of charge and temperatures of the battery packs (3) and to interconnect the battery packs (3) based thereon by control of a switching device (9) of the electric appliance (1) such that a preset operating voltage is provided at an electric motor (5) of the electric appliance (1) by means of the battery packs (3), wherein, if not all of the battery packs (3) inserted in the electric appliance (1) are required for providing the preset operating voltage, the control device (7) is configured to passively and/or actively electrically decouple that one of the battery packs (3) weakest with respect to the state of charge and/or the battery pack (3) with the highest temperature from the electric appliance (1) and the other battery packs (3), wherein the number of the battery packs, which are decoupled due to the temperature and/or the state of charge, depends on the preset operating voltage and the battery packs overall inserted in the electric appliance.

7. The electric appliance (1) according to claim 6,
**characterized in that**
the control device (7) is configured to determine the preset operating voltage based on the electric motor (5) of the electric appliance (1).

8. The electric appliance (1) according to claim 6 or 7,
**characterized in that**
the electric appliance (1) comprises a capturing device (8), which is configured to capture at least one measurement quantity characterizing the state of charge per battery pack (3).

9. The electric appliance (1) according to claim 8,
**characterized in that**
the capturing device (8) is configured to capture a respective voltage, a temperature, an impedance and/or a cell pressure at the battery packs (3).

10. The electric appliance (1) according to any one of claims 5 to 9,
**characterized in that**
the battery packs (3) inserted in the respective slots (4) of the electric appliance (1) can be arbitrarily connected in series with each other by means of the switching device (9).

## Revendications

1. Procédé d'exploitation de plusieurs blocs d'accumulateurs (3) installés dans un appareil électrique (1) à des emplacements d'enfichage respectifs, notamment de blocs d'accumulateurs au lithium, chaque bloc d'accumulateurs étant un paquet interconnecté de plusieurs cellules d'accumulateur, qui sont maintenues ensemble par une enveloppe ou un boîtier, selon lequel procédé des états de charge respectifs et des températures des blocs d'accumulateurs (3) sont déterminés à des intervalles temporels prédéfinis et les blocs d'accumulateurs (3) sont connectés de telle sorte qu'une tension d'exploitation prédéfinie est fournie à l'appareil électrique (1) au moyen des blocs d'accumulateurs (3) ; dans le cas où tous les blocs d'accumulateurs (3) installés dans l'appareil électrique (1) ne sont pas nécessaires pour la fourniture de la tension d'exploitation prédéfinie, au moins le plus faible des blocs d'accumulateurs (3) au regard de l'état de charge et/ou le bloc d'accumulateurs (3) ayant la température la plus élevée étant découplé électriquement passivement et/ou activement de l'appareil électrique (1) et des autres blocs d'accumulateurs (3), le nombre de blocs d'accumulateurs qui sont découplés sur la base de la température et/ou de l'état de charge dépendant de la tension d'exploitation prédéfinie et des blocs d'accumulateurs installés au total dans l'appareil électrique.

2. Procédé selon la revendication 1, **caractérisé en ce que** le bloc d'accumulateurs (3) ayant la température la plus élevée est découplé électriquement de l'appareil électrique (1) et des autres blocs d'accumulateurs (3), même si un autre bloc d'accumulateurs (3) devait présenter un état de charge plus faible, dans le cas où le bloc d'accumulateurs (3) ayant la température la plus élevée dépasse une température limite prédéfinie.

3. Procédé selon la revendication 1 ou 2, **caractérisé en ce que** l'appareil électrique (1) présente une tension d'exploitation de 36 V et trois blocs d'accumulateurs de 18 V (3) sont installés dans l'appareil électrique (1), le plus faible des blocs d'accumulateurs (3) au regard de l'état de charge et/ou le bloc d'accumulateurs (3) ayant la température la plus élevée étant découplé électriquement de l'appareil électrique (1) et des autres blocs d'accumulateurs (3).

4. Procédé selon la revendication 1 ou 2, **caractérisé en ce que** l'appareil électrique (1) présente une tension d'exploitation de 54 V et quatre blocs d'accumulateurs de 18 V (3) sont installés dans l'appareil électrique (1), le plus faible des blocs d'accumulateurs (3) au regard de l'état de charge et/ou le bloc d'accumulateurs (3) ayant la température la plus élevée étant découplé électriquement de l'appareil électrique (1) et des autres blocs d'accumulateurs (3).

5. Procédé selon l'une quelconque des revendications précédentes, **caractérisé en ce que** plus les états de charge et/ou les températures des blocs d'accumulateurs (3) varient rapidement, plus la longueur des intervalles temporels est prédéfinie petite.

6. Appareil électrique (1) muni de plusieurs blocs d'accumulateurs (3) installés à des emplacements d'enfichage respectifs (4) de l'appareil électrique (1), chaque bloc d'accumulateurs étant un paquet interconnecté de plusieurs cellules d'accumulateur, qui sont maintenues ensemble par une enveloppe ou un boîtier, l'appareil électrique (1) comprenant un appareil de commande (7), qui est adapté pour déterminer de manière continue des états de charge respectifs et des températures des blocs d'accumulateurs (3) et, sur la base de ceux-ci, connecter les blocs d'accumulateurs (3) par commande d'un appareil de commutation (9) de l'appareil électronique (1), de telle sorte qu'une tension d'exploitation prédéfinie est fournie à un moteur électrique (5) de l'appareil électrique (1) au moyen des blocs d'accumulateurs (3) ; dans le cas où tous les blocs d'accumulateurs (3) installés dans l'appareil électrique (1) ne sont pas nécessaires pour la fourniture de la tension d'exploitation prédéfinie, l'appareil de commande (7) étant adapté pour découpler électriquement passivement et/ou activement au moins le plus faible des blocs d'accumulateurs (3) au regard de l'état de charge et/ou le bloc d'accumulateurs (3) ayant la température la plus élevée de l'appareil électrique (1) et des autres blocs d'accumulateurs (3), le nombre de blocs d'accumulateurs qui sont découplés sur la base de la température et/ou de l'état de charge dépendant de la tension d'exploitation prédéfinie et des blocs d'accumulateurs installés au total dans l'appareil électrique.

7. Appareil électrique (1) selon la revendication 6, **caractérisé en ce que** l'appareil de commande (7) est adapté pour déterminer la tension d'exploitation prédéfinie à l'aide du moteur électrique (5) de l'appareil électrique (1).

8. Appareil électrique (1) selon la revendication 6 ou 7, **caractérisé en ce que** l'appareil électrique (1) comprend un appareil de détection (8), qui est conçu pour détecter au moins une grandeur mesurée caractérisant l'état de charge pour chaque bloc d'accumulateurs (3).

9. Appareil électrique (1) selon la revendication 8, **caractérisé en ce que** l'appareil de détection (8) est conçu de manière à détecter une tension respective, une température, une impédance et/ou une pression cellulaire pour les blocs d'accumulateurs (3).

10. Appareil électrique (1) selon l'une quelconque des revendications 5 à 9, **caractérisé en ce qu'**au moyen de l'appareil de commutation (9), les blocs d'accumulateurs (3) installés à des emplacements d'enfichage respectifs (4) de l'appareil électrique (1) peuvent être connectés en série les uns aux autres de manière quelconque.
